# EUROPEAN PATENT APPLICATION

(11) **EP 2 688 287 A2**
(43) Date of publication of application: **22.01.2014**
(21) Application number: 13176996.0
(22) Date of filing: 18.07.2013
(51) Int. Cl.: H04N 5/232

(54) **Photographing apparatus, photographing control method, and eyeball recognition apparatus**

(30) Priority: 18.07.2012 KR 20120078376
(71) Applicant: Samsung Electronics Co., Ltd, Gyeonggi-do 443-742 (KR)
(72) Inventor: Cho, Sung-goo, Seoul (KR); Leigh, Sang-won, Gyeonggi-do (KR); Lee, Jun-seok, Seoul (KR); Yu, Kyung-hwa, Seoul (KR); Chung, Jin-yong, Seoul (KR)
(74) Representative: Brandon, Paul Laurence

(57) **Abstract**

A photographing control method is provided. The photographing control method includes capturing an image of an object, detecting a facial area from within the captured image of the object, adjusting a location of the photographing apparatus based on a location of the detected facial area, and adjusting a zooming state of the photographing apparatus so that a size of the detected facial area falls within a predetermined size range.

## Description

### CROSS-REFERENCE TO RELATED APPLICATION

This application claims priority from Korean Patent Application No. 10-2012-0078376, filed on July 18, 2012 in the Korean Intellectual Property Office, the disclosure of which is incorporated herein by reference in its entirety.

### BACKGROUND

### 1. Field

Methods and apparatuses consistent with exemplary embodiments relate to a photographing apparatus, a photographing control method, and an image recognition apparatus, and more particularly, to a photographing apparatus configured to recognize an eyeball from within an image of an object, a photographing control method, and an image recognition apparatus.

### 2. Description of the Related Art

As digital technologies continue to develop, technology relating to analyzing image information and dividing the image into a specific area or a specific portion is being developed. Among these analyzing technologies, a facial recognition technology is being integrated into security apparatuses as well as digital cameras, and is being advanced in various ways.

In general, an objective of facial recognition technology is to determine whether or not a person's face exists within a particular image, and, if there is at least one face, to find a face of each person in the image and to display a location of the face. Such facial recognition technology may be utilized in one or more of a monitoring system, a mug shot matching system which may be used in conjunction with a criminal investigation, a search system which uses information relating to facial recognition, and an object-oriented coding system.

In order to further advance such facial recognition technology, studies relating to a method for recognizing a person's eyeball are being actively conducted for the purpose of realizing an interface which detects movement of a person's eyeball and/or a personal recognition system which uses the iris.

However, the accuracy of eyeball detection is a most important issue with respect to such an eyeball recognition method.

Therefore, there is a demand for increasing the accuracy of eyeball detection with respect to a method for detecting an eyeball of an object.

### SUMMARY

One or more exemplary embodiments may overcome the above disadvantages and other disadvantages not described above. However, it is understood that one or more exemplary embodiments are not required to overcome the disadvantages described above, and may not overcome any of the problems described above.

One or more exemplary embodiments provide a photographing apparatus which can detect a facial area and/or an eyeball area from a moving object, a photographing control method, and an image recognition apparatus.

According to an aspect of an exemplary embodiment, there is provided a photographing control method of a photographing apparatus, the method including: capturing an image of an object, detecting a facial area from within the captured image of the object, and adjusting a location of the photographing apparatus based on a location of the detected facial area, and adjusting a zooming state of the photographing apparatus so that a size of the detected facial area falls within a predetermined size range.

The capturing the image may include: emitting infrared radiation toward the object, receiving infrared energy which is reflected from the object, detecting the object by using the received reflected infrared energy, and tracing the detected object automatically.

The predetermined size range may include a size of the detected facial area of the object which is captured on an image capture area which is configured to detect an eyeball area of the object.

The photographing control method may further include mapping the location of the detected facial area onto an x-y plane of a three-dimensional (3D) coordinate system in which the object is located.

The adjusting the location of the photographing apparatus may include: rotating the photographing apparatus about a y-axis based on a range of x-axis coordinates which range is included in the mapped location of the detected facial area, and tilting the photographing apparatus about the x-axis based on a range of y-axis coordinates which range is included in the mapped location of the detected facial area. The adjusting the zooming state of the photographic apparatus may include: if the size of the detected facial area is smaller than a minimum value of the predetermined size range, performing a zoom-in operation, and, if the size of the detected facial area is larger than a maximum value of the predetermined size range, performing a zoom-out operation.

The photographing control method may further include detecting an eyeball area from within the detected facial area.

According to an aspect of another exemplary embodiment, there is provided a photographing apparatus including: an image capture device which captures an image of an object, a location adjuster which adjusts a location of the photographing apparatus, a zoom adjuster which adjusts a zooming state of the photographing apparatus, an image processor which detects a facial area from within the captured image of the object, and a controller which controls the location adjuster to adjust the location of the photographing apparatus based on a location of the detected facial area, and which controls the zoom adjuster to adjust the zooming state of the photographing apparatus so that a size of the detected facial area falls within a predetermined size range.

The photographing apparatus may further include: an infrared emitter which emits infrared radiation toward the object, and an infrared receiver which receives infrared energy which is reflected from the object, and the image processor may detect the object by using the received reflected infrared energy, and the controller may control the photographing apparatus to trace the detected object automatically.

The predetermined size range may include a size of the detected facial area of the object which is captured on an image capture area which is configured to detect an eyeball area of the object.

The controller may map the location of the detected facial area onto an x-y plane of a three-dimensional (3D) coordinate system in which the object is located.

The controller may control the location adjuster to rotate the photographing apparatus about a y-axis based on a range of x-axis coordinates which range is included in the mapped location of the detected facial area, and to tilt the photographing apparatus about the x-axis based on a range of y-axis coordinates which range is included in the mapped location of the detected facial area, and, if the size of the detected facial area is smaller than a minimum value of the predetermined size range, the controller may control the zoom adjuster to perform a zoom-in operation, and, if the size of the detected facial area is larger than a maximum value of the predetermined size range, the controller may control the zoom adjuster to perform a zoom-out operation.

The controller may control the image processor to detect an eyeball area from within the detected facial area.

According to an aspect of still another exemplary embodiment, there is provided an image recognition apparatus including: a display apparatus which displays a screen, a photographing apparatus which is disposed on an area of the display apparatus, and a controller which controls the display apparatus and the photographing apparatus. The photographing apparatus may include: an image capture device which captures an image of an object, a location adjuster which adjusts a location of the photographing apparatus, a zoom adjuster which adjusts a zooming state of the photographing apparatus, and an image processor which detects a facial area from within the captured image of the object. The controller may control the location adjuster to adjust the location of the photographing apparatus based on a location of the detected facial area, and may control the zoom adjuster to adjust the zooming state of the photographing apparatus so that a size of the detected facial area falls within a predetermined size range.

The controller may control an operation of the display apparatus by using an eyeball area which is detected from within the detected facial area.

According to an aspect of still another exemplary embodiment, there is provided a non-transitory computer readable recording medium in which a program code for performing a photographing control method which is executable by using a photographing apparatus is recorded, the photographing control method including: capturing an image of an object, detecting a facial area from within the captured image of the object, and adjusting a location of the photographing apparatus based on a location of the detected facial area, and adjusting a zooming state of the photographing apparatus so that a size of the detected facial area falls within a predetermined size range.

According to various exemplary embodiments described above, the location of the photographing apparatus is adjusted based on the location of the facial area which is detected from within the captured image of the object, and the zooming state of the photographing apparatus is adjusted so that the size of the detected facial area falls within the predetermined size range. Therefore, the facial area/eyeball area can be easily detected from the moving object.

### BRIEF DESCRIPTION OF THE DRAWINGS

The above and/or other aspects will be more apparent by describing in detail exemplary embodiments, with reference to the accompanying drawings, in which:

FIG. 1 is a block diagram illustrating a photographing apparatus according to an exemplary embodiment;

FIG. 2 is a block diagram illustrating the photographing apparatus of FIG. 1 in detail;

FIG. 3 is a front view of the photographing apparatus according to an exemplary embodiment;

FIG. 4 is a block diagram illustrating an eyeball recognition apparatus according to an exemplary embodiment;

FIGS. 5 and 6 are views which illustrate a photographing control method according to an exemplary embodiment;

FIG. 7 is a view which illustrates an operation relating to eyeball recognition according to an exemplary embodiment; and

FIG. 8 is a flowchart illustrating a photographing control method according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be practiced without those specifically defined matters. In addition, functions or elements known in the related art are not described in detail because they would obscure the exemplary embodiments with unnecessary detail.

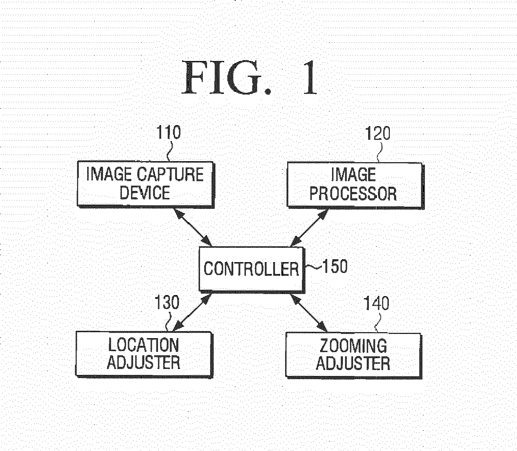

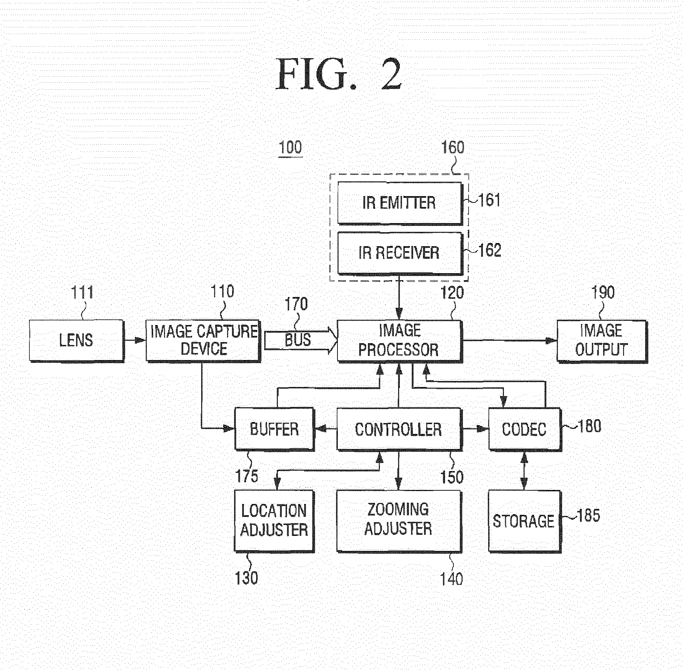

FIG. 1 is a block diagram which illustrates a photographing apparatus according to an exemplary embodiment. FIG. 2 is a block diagram which illustrates the photographing apparatus of FIG. 1 in detail. Referring to FIGS. 1 and 2, a photographing apparatus 100 includes an image capture device 110, a lens 111, an image processor 120, a location adjuster 130, a zoom adjuster 140, a controller 150, an infrared (IR) camera 160, a bus 170, a coder/decoder (codec) 180, a storage 185, and an image output unit 190 in whole or in part. The IR camera 160 may include an IR emitter 161 and an IR receiver 162.

The photographing apparatus 100 may include, for example, a pan-tilt-zoom (PTZ) camera, which can be rotated in a horizontal direction (i.e., rotated about a vertical axis), can be tilted in a vertical direction (i.e., tilted with respect to a horizontal axis), and can perform a zoom operation.

The lens 111 collects light from a subject and focuses an optical image onto an image capture area.

The image capture device 110 outputs the optical image, which is focused onto the image capture area via the lens 111, as an analog image signal, and converts the analog image signal into a digital image signal and outputs the digital image signal.

The image capture device 110 which performs such an operation may include at least one pixel and an analog-to-digital (A/D) converter. Each pixel outputs the analog image signal, and the A/D converter converts the analog image signal into the digital image signal and outputs the digital image signal.

Each pixel of the image capture device 110 may be realized by using at least one of a complementary metal oxide semiconductor (CMOS) optical sensor and a charge coupled device (CCD) optical sensor. Such pixels are collected, thereby constituting an image capture area. Each pixel included in the image capture area of the image capture device 110 may read out the optical image by using at least one of a rolling shutter method and a global shutter method. In the global shutter method, all of the pixels of the image capture area read out the optical image simultaneously. Conversely, in the rolling shutter method, one pixel or a plurality of pixels read out the optical image sequentially.

Accordingly, the image capture device 110 captures an image from an object, and outputs an image signal which relates to the captured image of the object.

The IR emitter 161 emits IR radiation. In particular, the IR emitter 161 may emit structured light which has a specific pattern toward a specific area where the object is located.

The IR receiver 161 receives the IR energy which is reflected from the specific area toward which the IR radiation is emitted. In particular, if structured light which has a specific pattern is projected onto a surface of the object, the specific pattern may be distorted due to curves on the surface of the object, and thus, the IR receiver 162 may receive distorted reflective infrared energy.

The object recited herein may include a person to be traced.

The bus 170 may enable propagation of the image signal which is generated by an image capture element to the image processor 120. The bus 170 may enable propagation of the image signal which is generated by the image capture element to a buffer 175. The bus 170 may include a plurality of channels in accordance with the output image signal.

The buffer 175 may temporarily store the image signal which is generated by the image capture element. The buffer 175 may re-arrange the image signal which is temporarily stored in sequence and may transmit the re-arranged image signal to the image processor 120.

The image processor 120 may perform at least one signal processing function with respect to the image signal received from the image capture device 110 and/or from the buffer 175, and may output the processed image signal to the image output unit 190 in order to display the photographed image. Further, the image processor 120 may output the processed image signal to the codec 180 in order to store the photographed image.

In particular, the image processor 120 may perform at least one function from among digital zoom, auto white balance (AWB), auto focus (AF), and auto exposure (AE) with respect to the image signal which is received from the image capture device 110 in order to convert a format and adjust an image scale, and the image processor 120 may then output the image signal to at least one of the image output unit 190 and the codec 180.

The image processor 120 may detect the object by using the reflected infrared energy which is received via the IR receiver 162. In particular, the image processor 120 compares the reflected infrared energy which has the distorted specific pattern which is received via the IR receiver 162 with the emitted infrared radiation which has the predetermined specific pattern, and uses a result of the comparison to calculate a respective distance to each pixel. The image processor 120 may generate a depth image which relates to a specific area by using at least one calculated distance. The depth image which relates to the specific area may include a depth image which relates to the object. Further, the image processor 120 may generate a skeletonized image which relates to the object based on the depth image.

In particular, the image processor 120 may detect the object based on at least one of the depth image and the skeletonized image. More particularly, the image processor 120 may detect the object by comparing the at least one of the generated depth image and the skeletonized image with at least one of a pre-stored depth image and a pre-stored skeletonized image.

The image processor 120 may detect the object by using the image captured by the image capture device 110 without using the depth image. In particular, the image processor 120 may detect the object to be traced by comparing a current pixel value which constitutes a current frame of the captured image with a pixel value which constitutes a previous frame. Further, the image processor 120 may detect the object by removing a background from the captured current frame via image processing.

If the object is detected as described above, the controller 150 may control at least one of the location adjuster 130 and the zoom adjuster 140 to trace the detected object automatically and thereby capture the image of the object.

The image processor 120 may detect a facial area of the object from within the captured image of the object. In particular, the image processor 120 may detect a facial candidate area by using a biologically motivated selective attention model. More particularly, the image processor 120 may generate a saliency map which relates to the captured image and may detect the facial candidate area by using the generated saliency map. The biologically motivated selective attention model is a model which models a human critical structure and selected bodily processes, and this model may be divided into a data-driven processing aspect which reacts to an input image immediately and a conceptually-driven processing aspect which uses learned information. Because the data-driven processing aspect and the conceptually-driven processing aspect are well known, a detailed description thereof is omitted. The image processor 120 may detect a facial area by applying a Viola-Jones method, a Haar feature method, or an Adaboost algorithm to the detected facial candidate area. Each method and algorithm is well known and thus a detailed description thereof is omitted.

The image processor 120 combines the image captured by the image capture device 110 and the depth image generated by the IR camera 160, thereby generating a 3-dimensional (3D) image. In this case, the image processor 120 may detect the facial area of the object from within the 3D image by using at least one of the above-described methods and algorithms.

The image processor 120 may detect an eyeball area from within the facial area captured by the image capture device 110. For example, the image processor 120 may determine an area having a highest correlation with pre-stored eyeball area information from within the captured facial area as an eyeball area. However, this should not be considered as limiting, and the image processor 120 may detect the eyeball area by using any one or more of various well-known eyeball detecting methods.

The codec 180 may encode the image signal received from the image processor 120. The codec 180 may transmit the encoded image signal to the storage 185. Further, the codec 180 may decode the image signal which is encoded and stored in the storage 185. The codec 180 may transmit the decoded image signal to the image processor 120.

The storage 185 may store the image captured by the image capture device 110 in a compressed format. The storage 185 may include, for example, at least one of a flash memory, a hard disk, and a digital versatile disk (DVD).

The image output unit 190 may output the image signal received from the image processor 120 to an internal display apparatus or to an external output terminal.

The location adjuster 130 may adjust a location of the photographing apparatus 100. In particular, the location adjuster 130 rotates the photographing apparatus 100 in a horizontal direction about a vertical axis, thereby adjusting a horizontal location and/or a lateral angle, and tilts the photographing apparatus 100 in a vertical direction about a horizontal axis, thereby adjusting a vertical location and/or a tilt angle. The location adjuster 130 may be realized by at least one of various motors, such as, for example, a direct current (DC) motor, an alternating current (AC) motor, a servo motor, a step motor or a brushless DC (BLDC) motor.

The zoom adjuster 140 may adjust a zooming state of the photographing apparatus 100. In particular, the zoom adjuster 140 may adjust a zooming ratio by causing the photographing apparatus 100 to zoom in or zoom out.

The controller 150 controls an overall operation of the photographing apparatus 100. In particular, the controller 150 may control each or all of the image capture device 110, the lens 111, the image processor 120, the location adjuster 130, the zoom adjuster 140, the IR camera 160, the bus 170, the codec 180, the storage 185, and the image output unit 190 in whole or in part.

In particular, the controller 150 may control at least one of the location adjuster 130 and the zoom adjuster 140 to trace the detected object automatically and capture the image of the object. More particularly, if the detected object is moved, the controller 150 may control the location adjuster 130 to rotate or tilt the photographing apparatus 100 based on the direction in which the object is moved. Further, if the detected object is far away from the photographing apparatus 100 and thus the image of the object which is captured by the image capture device 110 is smaller than a minimum value of a predetermined size range, the controller 150 controls the zoom adjuster 140 to perform a zoom-in operation, and, if the image of the object which is captured by the image capture device 110 is larger than a maximum value of the predetermined size range, the controller 150 controls the zoom adjuster 140 to perform a zoom-out operation. Accordingly, the photographing apparatus 100 may trace the object automatically and capture the image of the object.

Further, the controller 150 may control the location adjuster 130 to adjust a location of the photographing apparatus 100 based on a location of the facial area which is detected from within the captured image of the object, and may control the zoom adjuster 140 to adjust the zooming state of the photographing apparatus 100 so that a size of the detected facial area falls within the predetermined size range.

In particular, the controller 150 maps the location of the detected facial area onto an x-y plane of a three-dimensional (3D) coordinate system in which the object is located. More particularly, the controller 150 may map two-dimensional (2D) coordinates (x,y) in which the facial area which is detected from within the image which includes the captured object is located onto coordinates (X,Y) of the facial area on the 3D coordinate system in which the object is located with respect to an original point, which is the location of the photographing apparatus 100. The coordinates x, y respectively refer to horizontal and vertical coordinate values on the image plane, and X, Y respectively refer to horizontal and vertical coordinate values on the 3D coordinate system in which the object is located.

In this case, the controller 150 may control the location adjuster 130 to rotate the photographing apparatus in the horizontal direction, i.e., about a vertical axis, based on a range of horizontal coordinates (X) of the mapped location of the detected facial area, and to tilt the photographing apparatus in the vertical direction, i.e., about a horizontal axis, based on a range of vertical coordinates (Y) of the mapped location of the detected facial area.

The controller 150 may compare a size of the facial area of the captured object based on rotation and tilting and a predetermined size range. The predetermined size range refers to a size of the facial area of the object that should be captured on the image capture area in order to detect an eyeball area of the object. The predetermined size range includes a first size value and a second size value. The first size value refers to a minimum size of the facial area of the object that should be captured on the image capture area to detect the eyeball area of the object, and the second size value refers to a maximum size of the facial area of the object that should be captured on the image capture area to detect the eyeball area of the object.

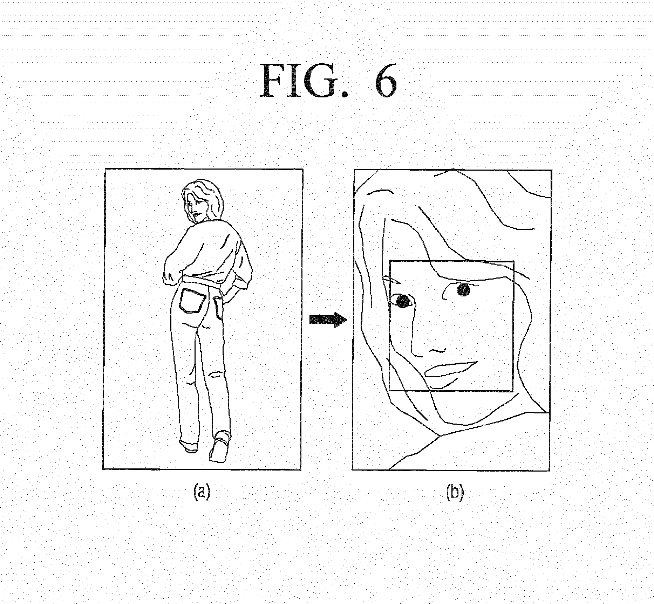

FIG. 6 is a view which illustrates the predetermined size range according to an exemplary embodiment. In particular, the size of the facial area which is captured on the image capture area should always fall within the predetermined size range in order to recognize the eyeball of the object. If the photographing apparatus 100 photographs the object as shown in (a) of FIG. 6, the photographing apparatus 100 may detect a facial area of the object. In this case, the controller 150 adjusts the lateral rotation, the tilt, and the zooming state of the photographing apparatus based on the facial area of the object, so that the size of the facial area which is captured on the image capture area always falls within the predetermined size range as shown in (b) of FIG. 6.

If the size of the facial area which is captured on the image capture area is smaller than the predetermined first size (i.e., the minimum size value within the predetermined size range), the controller 150 controls the zoom adjuster 140 to perform a zoom-in operation, and, if the size of the facial area which is captured on the image capture area exceeds the predetermined second size (i.e., the maximum size value within the predetermined size range), the controller controls the zoom adjuster 140 to perform a zoom-out operation.

If the photographing apparatus 100 includes the IR camera 160, the controller 150 may calculate a distance between the photographing apparatus 100 and the object by analyzing the depth image. In particular, the controller 150 may map the 2D coordinates (x,y) in which the facial area which is detected from the captured image which includes the object is located onto the coordinates (X,Y,Z) of the facial area on the 3D coordinate system in which the object is located with respect to the original point, which is the location of the photographing apparatus 100. The Z coordinate refers to a distance to the object from the location of the photographing apparatus 100 in the 3D coordinate system.

In particular, the controller 150 may control the location adjuster to rotate the photographing apparatus in the horizontal direction, i.e., about the vertical axis, based on a range of horizontal coordinates (X) of the mapped location of the facial area, and to tilt the photographing apparatus in the vertical direction, i.e., about the horizontal axis, based on a range of vertical coordinates (Y) of the mapped location of the facial area. Further, the controller 150 may control the zoom adjuster 140 to control the zooming state of the photographing apparatus based on the distance (Z) to the facial area of the object from the photographing apparatus 100 as mapped on the 3D coordinate system. In particular, the controller 150 may control the zoom adjuster 140 to control the zooming state of the photographing apparatus by using a zooming ratio of the photographing apparatus 100, which is determined based on the distance (Z) to the facial area of the object from the photographing apparatus 100, in order for the size of the facial area which is captured on the image capture area to fall within the predetermined size range.

Further, even if the object is moved, the controller 150 may control at least one of the location adjuster 130 and the zoom adjuster 140 by repeating the above-described operation, so that the size of the facial area which is captured on the image capture area always falls within the predetermined size range.

According to various exemplary embodiments described above, the eyeball of the object can be easily recognized by controlling the size of the facial area which is captured on the image capture area to always fall within the predetermined size range.

The controller 150 may control the image processor 120 to detect an eyeball area from within the facial area which is captured on the image capture area of the photographing apparatus which has been adjusted for its location and zooming state. In particular, the controller 150 may control an operation of an external apparatus which is connected to the photographing apparatus 100 by using movement of the detected eyeball area and iris information relating to the detected eyeball area.

Although the image processor 120 is a separate element from the controller 150 in FIGS. 1 and 2, in an exemplary embodiment, the controller 150 may be configured to perform the above-described function of the image processor 120.

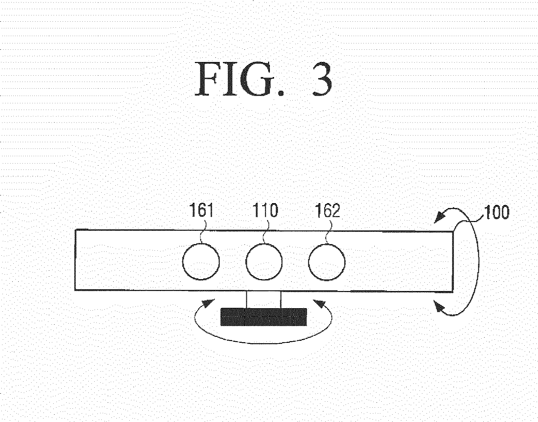

FIG. 3 is a front view of the photographing apparatus according to an exemplary embodiment. Referring to FIG. 3, the photographing apparatus 100 may include the image capture device 110 and the IR camera 160, which includes the IR emitter 161 and the IR receiver 162. The image capture device 110 may be used to obtain a color image relating to an object. Further, the IR camera 160 may be used to obtain a depth image relating to the object. As shown in FIG. 3, the photographing apparatus 100 may include both of the image capture device 110 and the IR camera 160. However, this configuration should not be considered as limiting, and the photographing apparatus 100 may not include the IR camera 160, depending on various circumstances. Further, the photographing apparatus 100 may be rotated in a horizontal direction, i.e., about a vertical axis, as illustrated at the bottom portion of the drawing, or tilted in a vertical direction, i.e., about a horizontal axis, as illustrated at the right-side portion of the drawing, under control of the controller 150.

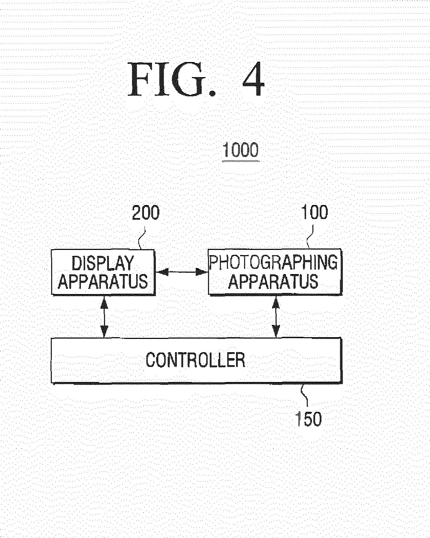

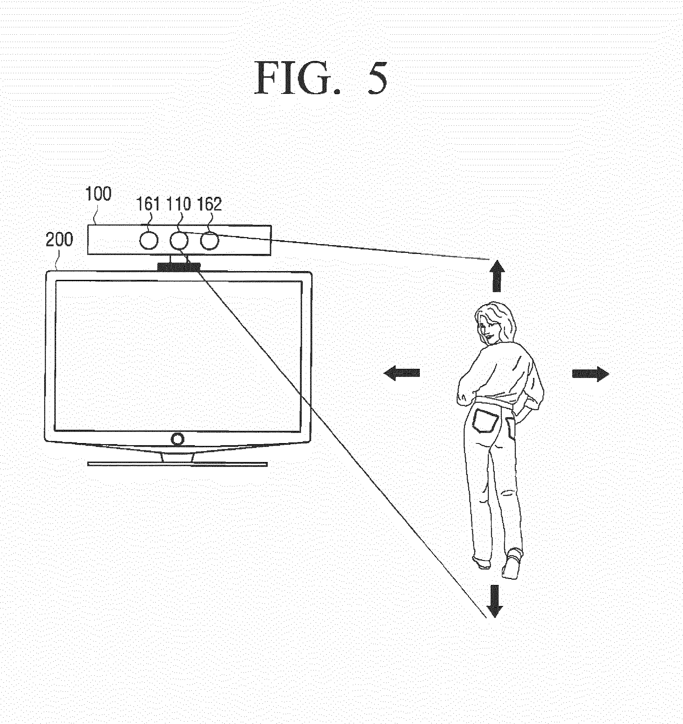

FIG. 4 is a block diagram which illustrates an eyeball recognition apparatus according to an exemplary embodiment. FIG. 5 is a view which illustrates a photographing control method according to an exemplary embodiment. Referring to FIGS. 4 and 5, the eyeball recognition apparatus 1000 includes a photographing apparatus 100, a display apparatus 200, and a controller 150, in whole or in part.

The photographing apparatus 100 photographs an object. In particular, the photographing apparatus 100 may trace the object automatically, and may photograph the object if the object is moved. Further, the photographing apparatus 100 may photograph the object so that a size of a facial area which is captured on an image capture area falls within a predetermined size range.

The display apparatus 200 display a screen. The display apparatus 200 may be realized by at least one of a liquid crystal display (LCD), a thin film transistor-liquid crystal display, an organic light emitting diode (OLED) display, a flexible display, a 3D display, and a transparent display.

The controller 150 controls an overall operation of the eyeball recognition apparatus 100. In particular, the controller 150 may control the photographing apparatus 100 and the display apparatus 200 in whole or in part.

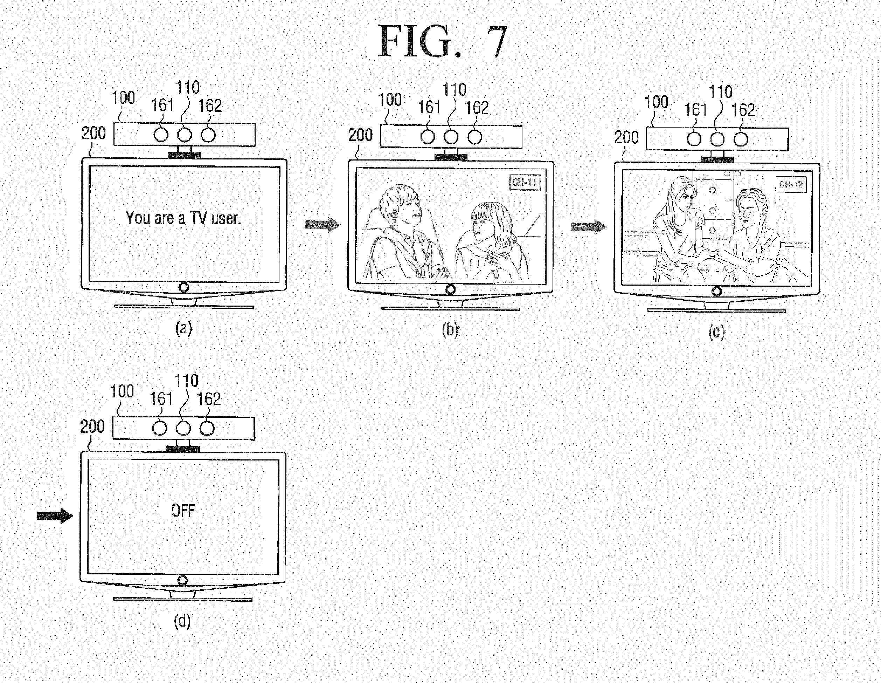

In particular, the controller 150 may control an operation of the display apparatus 200 which is connected to the photographing apparatus 100 by using movement of a detected eyeball area and iris information relating to the detected eyeball area. This will be described in detail below with reference to FIG. 7.

FIG. 7 is a view which illustrates an operation relating to eyeball recognition according to an exemplary embodiment. As shown in (a) of FIG. 7, the controller 150 determines whether or not a user of the display apparatus 200 is a registered user by using iris information relating to the detected eyeball area. If the user of the display apparatus 200 is a registered user, the display apparatus 200 displays a screen as shown in (b) of FIG. 7. The user may move his/her eyeball in an upward, downward, leftward, or rightward direction when the screen is displayed as shown in (b) of FIG. 7. In particular, the controller 150 may change the channel of the display apparatus 200 by using movement information relating to the detected eyeball area. For example, the display apparatus 200 may display the changed channel, i.e., a change from channel 11 to channel 12, as shown in (c) of FIG. 7. Further, the user may turn off the display apparatus 200 as shown in (d) of FIG. 7 by performing a previously registered eyeball operation which corresponds to powering off the display apparatus 200.

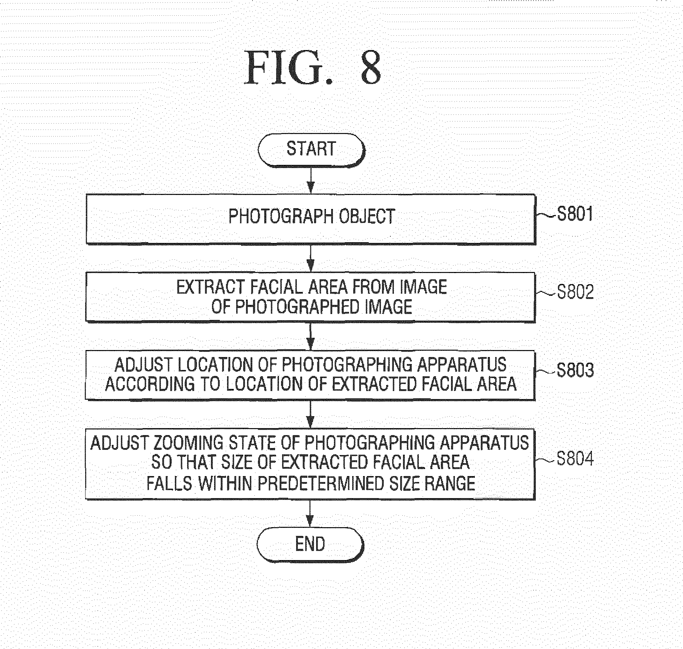

FIG. 8 is a flowchart which illustrates a photographing control method according to an exemplary embodiment. Referring to FIG. 8, in operation S801, an object is photographed. The operation of photographing may include emitting infrared radiation toward the object, receiving infrared energy which is reflected from the object, detecting information relating to the object by using the received reflected infrared energy, and tracing the object automatically and photographing the object based on the detected information relating to the object.

In operation S802, a facial area is detected from an image of the photographed object.

In operation S803, a location of the photographing apparatus is adjusted based on a location of the detected facial area. Then, in operation S804, a zooming state of the photographing apparatus is adjusted so that a size of the detected facial area falls within a predetermined size range. The predetermined size range may include a minimum size of the facial area of the object that should be captured on an image capture area in order to detect an eyeball area of the object.

The above-described photographing control method may further include mapping the location of the detected facial area onto an x-y plane of a 3D coordinate system in which the object is located. In particular, the operation of adjusting may include rotating the photographing apparatus in a horizontal direction, i.e., about a vertical axis, based on a range of x-axis coordinates which range is included in the mapped location of the detected facial area, tilting the photographing apparatus in a vertical direction, i.e., about a horizontal axis, based on a range of y-axis coordinates which range is included in the mapped location of the detected facial area, and, if the size of the facial area is smaller than a minimum value of the predetermined size range, performing a zoom-in operation, and if the size of the facial area is larger than a maximum value of the predetermined size range, performing a zoom-out operation.

The above-described photographing control method may further include detecting an eyeball area from within the detected facial area of the image which is captured by the adjusted photographing apparatus.

The photographing control method of the photographing apparatus according to various exemplary embodiments described above may be realized by using a program code and may be stored in a non-transitory computer readable medium which may be provided to each server or apparatus.

The non-transitory computer readable medium refers to a medium that stores data semi-permanently rather than storing data for a very short time, such as, for example, a register, a cache, and/or a memory, and is readable by an apparatus. In particular, the above-described various applications or programs may be stored in a non-transitory computer readable medium such as a compact disk (CD), a digital versatile disk (DVD), a hard disk, a Blu-ray disk, a universal serial bus (USB), a memory card, and/or a read-only memory (ROM), and may be provided.

The foregoing exemplary embodiments and advantages are merely exemplary and are not to be construed as limiting with respect to the present inventive concept. The exemplary embodiments can be readily applied to other types of apparatuses. Further, the description of the exemplary embodiments is intended to be illustrative, and not to limit the scope of the claims, and many alternatives, modifications, and variations will be apparent to those skilled in the art.

## Claims

1. A photographing control method of a photographing apparatus, the method comprising:
capturing an image of an object;
detecting a facial area from within the captured image of the object; and
adjusting a location of the photographing apparatus based on a location of the detected facial area, and adjusting a zooming state of the photographing apparatus so that a size of the detected facial area falls within a predetermined size range.

2. The photographing control method as claimed in claim 1, wherein the capturing the image comprises:
emitting infrared radiation toward the object;
receiving infrared energy which is reflected from the object;
detecting the object by using the received reflected infrared energy; and
tracing the detected object automatically.

3. The photographing control method as claimed in claim 1, wherein the predetermined size range includes a size of the detected facial area of the object which is captured on an image capture area which is configured to detect an eyeball area of the object.

4. The photographing control method as claimed in claim 1, further comprising mapping the location of the detected facial area onto an x-y plane of a three-dimensional (3D) coordinate system in which the object is located.

5. The photographing control method as claimed in claim 4, wherein the adjusting the location of the photographic apparatus comprises:
rotating the photographing apparatus about a y-axis based on a range of x-axis coordinates which range is included in the mapped location of the detected facial area;
tilting the photographing apparatus about the x-axis based on a range of y-axis coordinates which range is included in the mapped location of the detected facial area; and
if the size of the detected facial area is smaller than a minimum value of the predetermined size range, performing a zoom-in operation, and, if the size of the detected facial area is larger than a maximum value of the predetermined size range, performing a zoom-out operation.

6. The photographing control method as claimed in any one of claims 1 to 5, further comprising detecting an eyeball area from within the detected facial area.

7. A photographing apparatus comprising:
an image capture device which captures an image of an object;
a location adjusting unit which adjusts a location of the photographing apparatus;
a zooming adjusting unit which adjusts a zooming state of the photographing apparatus;
an image processing unit which detects a facial area from within the captured image of the object; and
a controller which controls the location adjusting unit to adjust the location of the photographing apparatus based on a location of the detected facial area, and controls the zooming adjusting unit to adjust the zooming state of the photographing apparatus so that a size of the detected facial area falls within a predetermined size range.

8. The photographing apparatus as claimed in claim 7, further comprising:
an infrared emitter which emits infrared radiation toward the object; and
an infrared receiver which receives infrared energy which is reflected from the object,
wherein the image processing unit detects the object by using the received reflected infrared energy, and the controller controls the photographing apparatus to trace the detected object automatically.

9. The photographing apparatus as claimed in claim 7, wherein the predetermined size range includes a size of the detected facial area of the object which is captured on an image capture area which is configured to detect an eyeball area of the object.

10. The photographing apparatus as claimed in claim 7, wherein the controller maps the location of the detected facial area onto an x-y plane of a three-dimensional (3D) coordinate system in which the object is located.

11. The photographing apparatus as claimed in claim 10, wherein the controller controls the location adjusting unit to rotate the photographing apparatus about a y-axis based on a range of x-axis coordinates which range is included in the mapped location of the detected facial area, and to tilt the photographing apparatus about the x-axis based on a range of y-axis coordinates which range is included in the mapped location of the detected facial area,
wherein, if the size of the detected facial area is smaller than a minimum value of the predetermined size range, the controller controls the zooming adjusting unit to perform a zoom-in operation, and, if the size of the detected facial area is larger than a maximum value of the predetermined size range, the controller controls the zooming adjusting unit to perform a zoom-out operation.

12. The photographing apparatus as claimed in any one of claims 7 to 11, wherein the controller controls the image processing unit to detect an eyeball area from within the detected facial area.

13. An image recognition apparatus comprising:
a display apparatus which displays a screen;
a photographing apparatus which is disposed on an area of the display apparatus; and
a controller which controls the display apparatus and the photographing apparatus,
wherein the photographing apparatus comprises:
an image capture device which captures an image of an object;
a location adjusting unit which adjusts a location of the photographing apparatus;
a zooming adjusting unit which adjusts a zooming state of the photographing apparatus; and
an image processing unit which detects a facial area from within the captured image of the object,
wherein the controller controls the location adjusting unit to adjust the location of the photographing apparatus based on a location of the detected facial area, and controls the zooming adjusting unit to adjust the zooming state of the photographing apparatus so that a size of the detected facial area falls within a predetermined size range.

14. The image recognition apparatus as claimed in claim 13, wherein the controller controls an operation of the display apparatus by using an eyeball area which is detected from within the detected facial area.

15. A recording medium in which a program code for performing a photographing control method of a photographing apparatus is recorded, the photographing control method comprising:
capturing an image of an object;
detecting a facial area from within the captured image of the object; and
adjusting a location of the photographing apparatus based on a location of the detected facial area, and adjusting a zooming state of the photographing apparatus so that a size of the detected facial area falls within a predetermined size range.
